# NEW EUROPEAN PATENT SPECIFICATION

(11) **EP 1 954 118 B2**
(45) Date of publication and mention of the opposition decision: **19.01.2022**
(45) Mention of the grant of the patent: 18.11.2009
(21) Application number: 06830113.4
(22) Date of filing: 24.11.2006
(51) Int. Cl.: A01G 17/06, F16B 2/24

(54) **USE OF A CLASPING DEVICE IN AGRICULTURAL APPLICATIONS**
BENUTZUNG EINER KLEMMVORRICHTUNG BEI LANDWIRTSCHAFTSVERWENDUNGEN
UTILISATION D'UN DISPOSITIF D'ATTACHE DANS DES APPLICATIONS AGRICOLES

(30) Priority: 28.11.2005 IT PN20050032 U
(43) Date of publication of application: 13.08.2008
(73) Proprietor: MOLLIFICIO BORTOLUSSI S.R.L., 33080 Fiume Veneto (PN) (IT)
(72) Inventor: BORTOLUSSI, Claudio, I-33080 Fiume Veneto (pordenone) (IT); BORTOLUSSI, Franco, I-33080 Fiume Veneto (pordenone) (IT); BORTOLUSSI, Francesco, I-33080 Fiume Veneto (pordenone) (IT)
(74) Representative: Grünecker Patent- und Rechtsanwälte PartG mbB
(86) International application number: PCT/EP2006/068901
(87) International publication number: WO 2007/060224

(56) References cited:
- WO-A-03/059043
- FR-A- 329 592
- US-A- 2 102 566
- US-A- 2 273 368
- US-A- 3 241 203
- US-A- 3 741 592
- US-A- 3 922 103
- US-A- 3 932 049

## Description

The present invention refers to the use of an improved kind of device intended for mutually connecting two elongated members extending across each other and in contact with each other at the crossing point.

The present invention is for use in agricultural applications in general to connect wire-like or rod-like members - or simply rods, as they will generally be referred to hereinbelow - that are actually comprised of rods or other elongated members, such as thin poles, posts or the like, with a plurality of metal wires that are stretched horizontally between said rods.

The whole arrangement of said rods set up in the ground vertically and said metal wires arranged vertically above each other to horizontally connect said rods with each other, forms a kind of large-meshed vertical grid, which the trunks, branches and shoots of agricultural plants, typically vines, can them be tied to.

For the upright rods to be connected with the horizontally extending wires in a stable and firm manner, various methods are generally used.

A first one among these methods calls for the use of small-length pieces of metal wire that is wound round the region at which each such horizontal wire crosses each such upright rod, wherein each such piece of wire is then tightened and clinched by means of tongs, pincers or pliers to hold the horizontal wire and the upright rod firmly together.

This method has a major drawback in that each single application requires some - albeit not very demanding - work to be done manually: if the fact is anyway taken into due consideration that preparing agricultural surfaces of an average size requires the application of some thousands of such pieces of wire to be tied and connected to a corresponding number of upright rods, the need arising for the working time required to tie said pieces of wire to connect each one of said horizontal wires to said upright rods to be reduced as much as possible may be most readily appreciated.

Moreover, this prior-art method has also the widely known drawback that, since the piece of wire is generally arranged obliquely, i.e. at an angle relative to both the upright rod and the horizontal wire, for it to be able to encircle both of them, said piece of wire anyway allows for the horizontal wire to slip off to some extent horizontally from the initial application point thereof on the rod; such largely known circumstance - which is also most undesired owing to a variety of further problems that it causes to arise, as those skilled in the art are well aware with, so that there is no point in dwelling upon them any further, actually - therefore contributes to making this method scarcely practicable.

Another method calls for the use of a special fixture to clasp and lock the wire with a double stalk; all it takes for such fixture to be mounted is using a simple screwdriver as a lever.

When this screwdriver is so used as a lever to exert a prising action, the above-indicated fixture is distorted, thereby locking the rod onto the wire in an optimum, definitive manner.

It however has a major drawback not only in that the fixture itself cannot be re-used in another application, but also - and this is certainly its most serious disadvantage - in that such fixture is rather obstructing, i.e. takes up a lot of space horizontally, so that it may disturb or be a hindrance for the vegetation, or may even damage the wire if the latter is of a protected, i.e. typically plastic-coated or plastic-sheathed kind. In this case, it may in fact occur that said fixture tears off or scratches such sheath or coating, thereby exposing the bare wire and causing further easily and readily imaginable problems to arise.

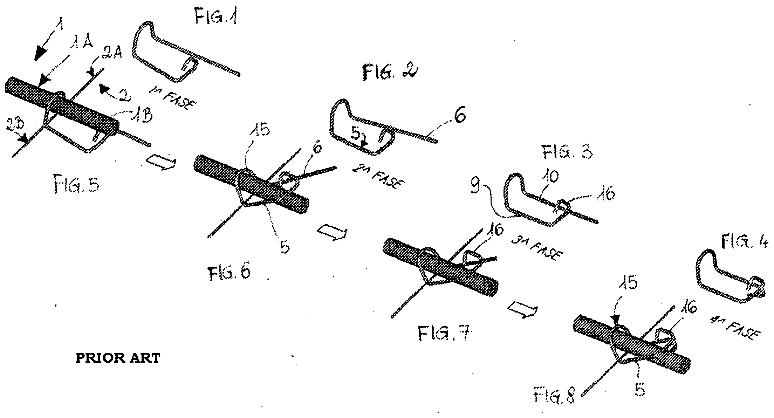

With reference to Figures 1 to 4, a prior art clasping device of the type described in US Patent 3,932,049 is applied between a rod 1 and a metal wire 2 that is laid thereonto so as to form a cross. From such crossing point between the wire and the rod, the latter branches out with two - obviously extending in opposite directions - arms 1A and 1B; similarly, from the same crossing point the metal wire 2 branches out with two respective opposite arms 2A and 2B.

A piece of flexible metal wire 3 is initially shaped into a kind of "saddle"-like conformation 15 and the two opposite elongated prong portions 5, 6 thereof are bent parallel to each other on a plane that is substantially orthogonal to the plane of said saddle 15.

One of said elongated prongs, e.g. the elongated prong 5, is in turn folded into a curl-like shape or a half-closed loop 16, so as to leave a small clear gap there for the other elongated prong 6 to be introduced thereinto.

Once the piece of wire 3 is given such conformation, the saddle portion 15 thereof is applied to the arm 1A of said upright rod 1, so that said two elongated prongs 5 and 6 thereof are able to engage on the opposite side of said rod beyond the wire 2. On the other hand, the illustrations in Figures 1 through to 8 are fully and exhaustively self-explaining in this connection.

With reference now to Figure 6, once this first application step is completed, said two elongated prongs 5 and 6 are elastically forced in the direction of the axis of the rod 1; owing to such forcing of said two elongated prongs, said saddle 15 is pressed to firmly abut against the corresponding portion of the same rod 1 due to the lever effect produced by the wire 2 acting as a pin or fulcrum.

This procedure can be accomplished in a still easier manner if - as indicated at 9 and 10 in the Figures - after having been folded round the respective opposite arms 2A and 2B of the metal wire 2, the two opposite elongated prongs 5, 6 of the piece of wire 3 extend further in a rectilinear form and parallel to each other, so as to improve the symmetry of the forces being applied.

The next step (Figure 7) comprises introducing the elongated prong 6 of the piece of wire 3 through said loop 16 formed by the other elongated prong 5, so that also said loop 16 is practically caused to press against the arm 1 B of the rod 1 owing to the lever effect generated by the wire 2 acting again as a pin upon the elongated prong 6, wherein said saddle acts again as the resisting point of such lever effect.

The following, final step of the procedure (Figure 8) calls for the elongated prong 6 of the piece of wire 3 to be bent round said loop 16 so as to prevent said two elongated prongs from releasing and separating from each other accidentally.

In practice, therefore, said piece of wire 3 establishes a contact in which it presses against and is in turn pressed by both the wire 2, which is used as a lever pin or fulcrum in this case, and the rod 1, which is compressed by both the saddle 15 and the loop 16 into which one of the elongated prongs of said piece of wire 3 is formed, so that the ultimate effect is a mutual locking or clasping action that effectively works for each and any slipping direction of the wire 2 relative to the rod 1 and vice-versa.

The above-described embodiment - although effective, simple and readily implemented - has anyway a drawback in that bending the elongated prong 6 of the piece of wire 3 to fix the clasping device in place calls anyway for a - albeit simple - tool to used; moreover, releasing said elongated prong for removing the device is not always quickly done, since this requires said elongated prong 6 to be straightened, thereby implying again the use of a certain tool to perform a specific manipulation.

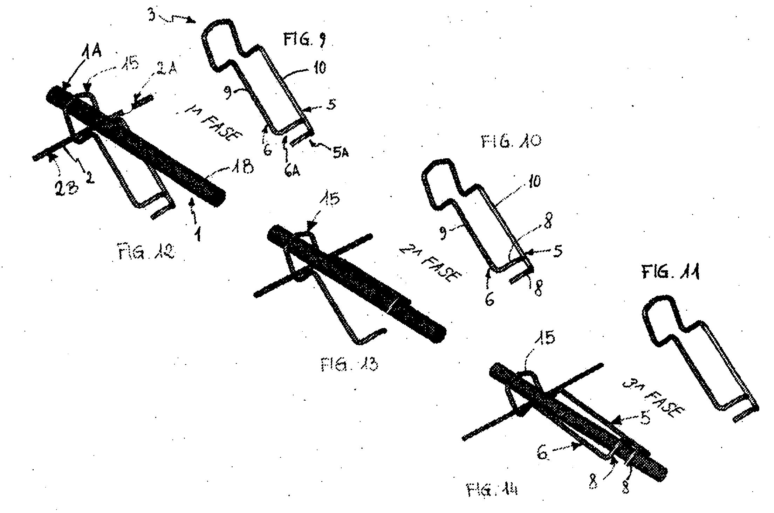

In view of doing away with this drawback, an advantageous improvement is therefore proposed, as illustrated in Figures 9 through to 12.

It would therefore be desirable, and it is the main object of the present invention, actually, to provide use of a fixture or device to connect in a firm, stable, removable manner an upright rod to the horizontal wires supported by it in the above-noted agricultural applications, such device being further readily and easily mounted, as well as effective in doing away with the above-noted drawbacks of prior-art methods and fixtures, while reducing, or anyway avoiding to increase the overall complexity of the related mounting and application procedure, and further keeping the manufacturing costs of the device to an adequately low level.

According to the present invention, these and further aims, which will be apparent from the following disclosure, are reached by use of a clasping device according to claim 1.

Features and advantages of the present invention will anyway be more readily understood from the description that is given below by way of nonlimiting example with reference to the accompanying drawings, in which:
- Figures 1 to 4 are respective views of various shapes taken by a prior art clasping device during mounting;
- Figures 5 to 8 are respective views of the corresponding forms and positions into which the prior art clasping device shown in the preceding Figures is operated when locking a connecting horizontal metal wire to a related support rod onto which said wire has to be clipped;
- Figures 9 to 11 are respective views of three shapes taken by a device during mounting wherein it should be noticed that these three views - although identical to each other - are illustrated in view of facilitating a comparison with three respective subsequent steps in the mounting procedure;
- Figures 12 to 14 are respective views of the corresponding forms and positions into which the device shown in the preceding Figures 9 to 11 is operated when locking a connecting horizontal metal wire to a related support rod onto which said wire has to be clipped.

With reference to figures 9 to 14 a clasping device to be used according to the present invention is applied between a rod 1 and a metal wire 2 that is laid thereonto so as to form a cross. From such crossing point between the wire and the rod, the latter branches out with two - obviously extending in opposite directions - arms 1A and 1B; similarly, from the same crossing point the metal wire 2 branches out with two respective opposite arms 2A and 2B.

A piece of flexible metal wire 3 is initially shaped into a kind of "saddle"-like conformation 15 and the two opposite elongated prong portions 5, 6 thereof are bent parallel to each other on a plane that is substantially orthogonal to the plane of said saddle 15.

Once the piece of wire 3 is given such conformation, the saddle portion 15 thereof is applied to the arm 1A of said upright rod 1, so that said two elongated prongs 5 and 6 thereof are able to engage on the opposite side of said rod beyond the wire 2.

With reference now to Figure 13, once this first application step is completed, said two elongated prongs 5 and 6 are elastically forced in the direction of the axis of the rod 1; owing to such forcing of said two elongated prongs, said saddle 15 is pressed to firmly abut against the corresponding portion of the same rod 1 due to the lever effect produced by the wire 2 acting as a pin or fulcrum.

This procedure can be accomplished in a still easier manner if - as indicated at 9 and 10 in the Figures - after having been folded round the respective opposite arms 2A and 2B of the metal wire 2, the two opposite elongated prongs 5, 6 of the piece of wire 3 extend further in a rectilinear form and parallel to each other, so as to improve the symmetry of the forces being applied.

The improvement according to the present invention is practically based on:
d) providing said two end sections 5 and 6 of the piece of wire 3 with different lengths,
e) engaging said two end sections 5 and 6 of the piece of wire 3 not with each other, as in the previously considered case, but rather again round and against said second arm 1B of the rod 1 to establish an independent coupling,
f) shaping said two end sections 5 and 6 of the piece of wire 3 - at the respective end portions thereof - into forming two respective curvatures 5a and 6a, which may be in the form of:
   - either arcs of a circle 8 adapted to fit onto said second arm 1A of the rod 1
   - or - more simply - angle bends.

The next step (Figures 13 and 14) calls for each one of said elongated prongs 5 and 6 to be elastically forced in an independent manner - using again the wire 2 as a lever pin - into coupling with the respective end portions 5a and 5b onto the arm 1B of the rod 1.

This is made possible by said two elongated prongs 5 and 6 being so provided with different lengths, as indicated above.
It can furthermore be most readily appreciated that the face, which is due to be grasped by said two elongated prongs 5 and 6 for coupling, is the same face of the rod 1 on which there has been applied said saddle 15.

It can at this point be fully and readily appreciated that, by having appropriately pre-shaped said piece of wire 3 as illustrated in Figures 9 to 11, the same effects and advantages are reached as in the previously discussed case when applying the device between said rod 1 and the related intersecting wire 2, since the piece of wire 3 is also in this particular embodiment caused to press against and in a substantially symmetrical manner relative to the point of intersection between the rod 1 and the wire 2.

It can finally be most readily appreciated that, if said two elongated prongs 5 and 6 are given an adequate length, they can be coupled by hand with the respective end portions on the arm 1B of the rod, without using any tool or performing any complicated manipulation, but just simply deflecting said elongated prongs as necessary; of course, the same elongated prongs can then be released and separated by performing an easily and readily done manipulation in the reverse order.

## Claims

1. Use of a clasping device in agricultural applications for fastening together a first one (1) and a second one (2) of two substantially rigid means having an elongated or wire-like shape, extending substantially across each other and in contact with each other at the point of mutual intersection, from which each one of said means branches out with respective pairs of opposite arms (1A, 1B) and (2A, 2B), respectively, to form a large-meshed vertical grid to which trunks, branches and shoots of agricultural plants can be tied, said first substantially rigid means (1) being rods (1) set up in a ground vertically and said second substantially rigid means (2) being metal wires (2) arranged vertically above each other to horizontally connect the rods with each other, said clasping device comprising a flexible metal wire-like member (3) adapted to be wound in a saddle-like manner (15) by about half a turn round the first arm (1A) of said first means (1), the two opposite elongated prongs (5, 6) of said wire-like member being bendable round respective ones of two opposite arms (2A, 2B) of said second means (2), wherein each of said elongated prongs (5, 6) comprises an end portion (6A, 6B) wherein the two end portions (5a, 6a) of said two elongated prongs (5, 6) are engaged, independently one another, elastically upon a surface of the opposite arm (1B) of said first means (1), which lies substantially on the same outer face of said first means (1) that is engaged by said saddle- like conformation (15) and said elongated prongs (5, 6) have different lengths;
and wherein each of said two end portions (5a, 6a) of said two opposite elongated prongs (5, 6) is engaged elastically against said opposite arm (1B) of said first means (1) by means of a curvature formed thereon in the form of an angle bend or an arc of a circle (8), and is selectively disengageable from said opposite arm (1B).

## Patentansprüche

1. Verwendung einer Klemmvorrichtung in agrikulturellen Anwendungen zum Befestigen einer ersten (1) und einer zweiten (2) von zwei im Wesentlichen starren Einrichtungen mit einer länglichen oder drahtartigen Form, die sich im Wesentlichen quer zueinander und an dem gemeinsamen Schnittpunkt in Kontakt miteinander erstrecken, von dem aus sich jede der Einrichtungen mit entsprechenden Paaren einander gegenüberliegender Arme (1A, 1 B) bzw. (2A, 2B) verzweigt, um ein großmaschiges vertikales Gitter zu bilden, an dem Stämme, Zweige und Schösslinge agrikultureller Pflanzen befestigt werden können, wobei die ersten im Wesentlichen starren Einrichtungen (1) Stäbe (1) sind, die vertikal in einen Boden gesetzt werden, und die zweiten im Wesentlichen starren Einrichtungen (2) Metalldrähte (2) sind, die vertikal übereinander angeordnet sind, um die Stäbe horizontal miteinander zu verbinden, wobei die Klemmvorrichtung ein flexibles, drahtartiges Metallelement (3) umfasst, das so eingerichtet ist, dass es sattelartig (15) um ungefähr eine halbe Windung um den ersten Arm (1A) der ersten Einrichtung (1) herum gewickelt ist, wobei die zwei einander gegenüberliegenden länglichen Schenkel (5, 6) des drahtartigen Elementes um entsprechende von zwei einander gegenüberliegenden Armen (2A, 2B) der zweiten Einrichtung (2) herum gebogen werden können, wobei jeder der länglichen Schenkel (5, 6) einen Endabschnitt (6A, 6B) umfasst, wobei die beiden Endabschnitte (5a, 6a) der beiden länglichen Schenkel (5, 6) unabhängig voneinander elastisch mit einer Fläche des gegenüberliegenden Arms (1B) der ersten Einrichtung (1) in Eingriff kommen, die im Wesentlichen an der gleichen Außenseite der ersten Einrichtung (1) liegt, mit der die sattelartige Struktur (15) in Eingriff kommt, und die länglichen Schenkel (5, 6) unterschiedliche Längen haben;
und wobei jeder der beiden Endabschnitte (5a, 6a) der beiden gegenüberliegenden länglichen Schenkel (5, 6) elastisch mit dem gegenüberliegenden Arm (1B) der ersten Einrichtung (1) mithilfe einer Krümmung in Eingriff kommt, die darauf in Form einer Wnkelbiegung oder eines Kreisbogens (8) ausgebildet ist, und selektiv von dem gegenüberliegenden Arm (1B) getrennt werden kann.

## Revendications

1. Utilisation d'un dispositif d'agrafage dans des applications agricoles pour fixer ensemble un premier (1) et un second (2) de deux moyens sensiblement rigides ayant une forme allongée ou filaire, s'étendant sensiblement en travers l'un de l'autre et en contact l'un avec l'autre au niveau de leur point d'intersection mutuelle, à partir duquel chacun desdits moyens se décompose en paires respectives de bras opposés (1A, 1B) et (2A, 2B), respectivement, pour former une grille verticale à grande maille à laquelle des troncs, des branches et des pousses de plantes agricoles peuvent être attachés, ledit premier moyen (1) sensiblement rigide étant des tiges (1) ajustées verticalement dans un sol et ledit second moyen (2) sensiblement rigide étant des fils métalliques (2) disposés verticalement au-dessus l'un de l'autre pour relier horizontalement les tiges l'une avec l'autre, ledit dispositif d'agrafage comprenant un élément métallique flexible filaire (3) adapté pour être enroulé à la manière d'un serre-fils (15) sur environ un demi-tour autour du premier bras (1A) dudit premier moyen (1), les deux griffes allongées (5, 6) opposées dudit élément filaire pouvant être courbées autour des deux bras opposés (2A, 2B) respectifs dudit second moyen (2), chacune desdites griffes allongées (5, 6) comprenant une portion d'extrémité (6A, 6B), les deux portions d'extrémité (5a, 6a) desdites deux griffes allongées (5, 6) étant engagées, indépendamment l'une par rapport à l'autre, élastiquement sur une surface du bras opposé (1B) dudit premier moyen (1), qui repose sensiblement sur la même face extérieure dudit premier moyen (1) qui est engagé avec ladite conformation de type serre-fils (15) et en ce que lesdites griffes allongées (5, 6) ont des longueurs différentes ;
et chacune desdites deux portions d'extrémité (5a, 6a) desdites deux griffes allongées (5, 6) opposées étant engagée élastiquement contre ledit bras opposé (1B) dudit premier moyen (1) à l'aide d'une courbure formée dessus sous la forme d'un coude ou d'un arc de cercle (8), et pouvant être sélectivement désengagée dudit bras opposé (1B).
